# EUROPÄISCHE PATENTSCHRIFT

(11) **EP 1 468 464 B1**
(45) Veröffentlichungstag und Bekanntmachung des Hinweises auf die Patenterteilung: **16.08.2006**
(21) Anmeldenummer: 03702447.8
(22) Anmeldetag: 15.01.2003
(51) Int. Cl.: H01M 8/04

(54) **VERFAHREN UND VORRICHTUNG ZUM ENTIONISIEREN VON K HLMEDIEN F R BRENNSTOFFZELLEN**
METHOD AND DEVICE FOR DEIONIZING COOLING MEDIA FOR FUEL CELLS
PROCEDE ET DISPOSITIF DE DESIONISATION DE LIQUIDES DE REFROIDISSEMENT POUR PILES A COMBUSTIBLE

(30) Priorität: 15.01.2002 DE 10201276
(43) Veröffentlichungstag der Anmeldung: 20.10.2004
(73) Patentinhaber: BASF Aktiengesellschaft, 67056 Ludwigshafen (DE)
(72) Erfinder: WULFF, Christian, 68163 Mannheim (DE); BITTERLICH, Stefan, 67246 Dirmstein (DE); VOSS, Hartwig, 67227 Frankenthal (DE)
(74) Vertreter: Reitstötter - Kinzebach
(86) Internationale Anmeldenummer: PCT/EP2003/000356
(87) Internationale Veröffentlichungsnummer: WO 2003/061044

(56) Entgegenhaltungen:
- WO-A-01/23495
- WO-A-99/44249
- US-A- 5 980 716

## Beschreibung

Die vorliegende Erfindung betrifft ein Verfahren zum Entionisieren von Kühlmedien für Brennstoffzellen, sowie eine Vorrichtung zur Durchführung des Verfahrens.

Brennstoffzellen sind Vorrichtungen, in denen ein Brennstoff, wie beispielsweise Methanol, Ethanol, Wasserstoff oder entsprechende Gemische, mit einem Verbrennungsmittel, wie etwa reinem Sauerstoff, Luft, Chlor- oder Bromgas, kontrolliert verbrannt werden kann, wobei die dabei freigesetzte Reaktionsenergie nicht nur in thermische Energie, sondern auch in elektrische Energie umgewandelt wird. Derartige Brennstoffzellen werden seit mehreren Jahrzehnten insbesondere in der Raumfahrt zur Erzeugung elektrischer Energie eingesetzt. Aufgrund ihres hohen Wirkungsgrades, ihrer geringen oder völlig fehlenden Schadstoffemission und ihrer geringen Geräuschentwicklung im Betrieb, ist das Interesse am Einsatz von Brennstoffzellen auch in anderen Bereichen in den letzten Jahren stark gestiegen. Hier sind insbesondere der Fahrzeug- und der Kraftwerksbereich zu nennen.

Brennstoffzellen werden typischerweise nach der Art des Elektrolyten, der die Anoden- und die Kathodenkammer voneinander trennt, klassifiziert. Ein besonders interessanter Brennstoffzellentyp, der sich insbesondere für den Einsatz in kleineren Kraftwerken und für den mobilen Einsatz (beispielsweise als Fahrzeugantrieb) eignet, ist die Polymerelektrolyt-Brennstoffzelle. Bei dieser Art von Brennstoffzelle wird eine ionenleitfähige Membran als Elektrolyt verwendet. Eine einzelne Festpolymer-Brennstoffzelle umfasst im allgemeinen eine sogenannte Membran/Elektrode-Einheit (membrane electrode assembly, MEA), bei der eine ionenleitfähige Membran zwischen einer Kathode und einer Anode angeordnet ist. Die ionenleitfähige Membran dient dabei gleichzeitig als Trennwand und als Elektrolyt. An der Grenzfläche zwischen den Elektroden und der Membran sind Katalysatorpartikel angeordnet, welche die Umsetzungsreaktion in der Brennstoffzelle fördern. Die Elektroden stehen typischerweise mit porösen Stromsammlern in Kontakt, welche außerdem die Elektrodenstruktur stabilisieren und eine Zufuhr von Brennstoff und Verbrennungsmittel erlauben. Da die Betriebsspannung einer Einzelzelle normalerweise weniger als 1 Volt beträgt, bestehen die meisten Brennstoffzellen aus einem Zellstapel, bei dem zur Erzeugung einer höheren Spannung zahlreiche aufeinandergestapelte Einzelzellen in Serie geschaltet sind. Die typische Betriebstemperatur einer Polymerelektrolyt-Brennstoffzelle liegt im Bereich von 100 °C. Höhere Temperaturen begünstigen zwar den Ablauf der elektrochemischen Reaktionen, können aber zu einer Beschädigung der Membran führen.

Da die elektrochemische Reaktion zwischen dem Brennstoff und den Verbrennungsmitteln exotherm verläuft, muss die Brennstoffzelle üblicherweise gekühlt werden, damit die gewünschte Betriebstemperatur eingehalten und eine Beschädigung der Membran vermieden werden kann. Da eine relativ große Wärmemenge bei nur geringer Temperaturdifferenz zur Umgebungstemperatur abgeführt werden muss, werden typischerweise flüssige Kühlmittel eingesetzt, die eine ausreichend hohe Wärmekapazität besitzen. Daher sind wässrige Kühlmittel besonders gut geeignet.

Wässrige Kühlmittel weisen jedoch den Nachteil auf, dass sie bei den metallischen Bestandteilen des Kühlkreislaufs und der Brennstoffzelle zur Korrosion beitragen können. Außerdem stellt ein Kühlmedium, das eine gewisse elektrische Leitfähigkeit aufweist, ein Sicherheitsproblem bei Brennstoffzellstapeln dar, die bei einer höheren Spannung, beispielsweise bei etwa 50 Volt, betrieben werden.

Wird entionisiertes Wasser als Kühlmittel verwendet, so kann dieses gleichzeitig zur Befeuchtung der in die Brennstoffzelle strömenden Reaktionsteilnehmer verwendet werden, um eine ausreichende Hydratisierung der Polymermembran zu gewährleisten. Je nach Betriebsbedingungen kann es erforderlich sein, dem Kühlwasser ein Forstschutzmittel, wie beispielsweise Ethylenglykol, oder andere Additive zuzugeben. Derartige Additive können sich jedoch in ionische Bestandteile zersetzen, was die Korrosionsgefahr weiter erhöht. Außerdem können derartige Zersetzungsprodukte die Katalysatorpartikel vergiften.

Da die elektrische Leitfähigkeit eines wässrigen Kühlmediums mit abnehmender Ionenkonzentration ebenfalls abnimmt, wurde bereits vorgeschlagen, Kühlmedien für Brennstoffzellen mit Hilfe eines Entionisierungsmittels zu entionisieren. Beispielsweise ist aus US 5,200,278 oder WO 00/17951 bekannt, Filter mit festen Ionentauscherharzen im Kühlkreislauf anzuordnen, so dass das wässrige Kühlmittel weitgehend entionisiert in den Brennstoffzellenstapel zurückgeleitet wird.

Nachteilig an den bekannten Systemen mit festen Ionenaustauschesharzen ist allerdings, dass der harzartige Ionenaustauscher nach einer gewissen Betriebszeit erschöpft ist und ausgetauscht werden muss. Dies ist mit einem hohen Wartungs- und Kostenaufwand verbunden.

Der vorliegenden Erfindung liegt nun das technische Problem zugrunde, das Entionisieren des Kühlmediums einer Brennstoffzelle derart zu vereinfachen, dass einerseits die Wartungsintervalle verlängert werden und andererseits, im Fall einer notwendigen Wartung, der Austausch oder die Erneuerung des Entionisierungsmittels einfach und kostengünstig durchgeführt werden kann.

Überraschend wurde gefunden, dass man dieses Problem durch Verwendung eines flüssigen Entionisierungsmittels lösen kann.

Dokument WO 01/23495 offenbart ein Verfahren zum Entionisieren eines in einem Kühlkreislauf zirkulierenden Kühlmediums einer Brennstoffzelle, in dem ein flüssiges Entionisierungsmittel integraler Bestandteil der Kühlmittelzusammensetzung ist und auch den Rostschutz des Kühlmittels gewährleisten soll. Die Kühlmittelzusammensetzung zirkuliert durch den gesamten Kühlmittelkreislauf, insbesondere auch durch die Brennstoffzellen.

Gegenstand der Erfindung ist ein Verfahren zum Entionisieren eines in einem Kühlkreislauf zirkulierenden Kühlmediums einer Brennstoffzelle, wobei man zumindest intermittierend das aus der Brennstoffzelle kommende Kühlmedium mit einem flüssigen Entionisierungsmittel innig in Kontakt bringt, so dass das Entionisierungsmittel lonen aus dem Kühlmedium aufnehmen kann, anschließend das Kühlmedium und das Entionisierungsmittel wieder trennt und das entionisierte Kühlmedium in die Brennstoffzelle zurückleitet.

Die in dem Kühlmedium enthaltenen gelösten lonen werden also derart abgereichert und reichern sich stattdessen in dem Entionisierungsmittel an. Ein besonderer Vorteil des flüssigen Entionisierungsmittels ist darin zu sehen, dass es in einem eigenen Kreislauf geführt werden kann, so dass eine Regeneration des Entionisierungsmittels bzw. ein Austausch von verbrauchtem Entionisierungsmittel gegen frisches Entionisierungsmittel auch im laufenden Betrieb der Brennstoffzelle erfolgen kann, ohne dass der Kühlmediumkreislauf beeinträchtigt wird.

Gemäß einer ersten Ausführungsform kann die Entionisierung intermittierend erfolgen. Sobald beispielsweise ein Leitfähigkeitssensor im Kühlkreislauf einen Anstieg der Leitfähigkeit des Kühlmediums registriert, was einer Zunahme der Ionenkonzentration entspricht, kann das Entionisierungsmittel beispielsweise über schaltbare Ventile im Kühlkreislauf mit dem Kühlmedium in Wechselwirkung gebracht werden, so dass ein Teil der Ionen aus dem Kühlkreislauf entfernt wird.

Gemäß einer zweiten Ausführungsform entionisiert man das Kühlmedium kontinuierlich. In diesem Fall verwendet man vorzugsweise Entionisierungseinrichtungen, die in den Kühlkreislauf integriert sind.

Damit im Kühlmedium gelöste Ionen von dem flüssigen Entionisierungsmittel effektiv aufgenommen werden können, bringt man vorteilhaft das Entionisierungsmittel mit dem Kühlmedium in Kontakt. Das In-Kontakt-Bringen umfasst im vorliegenden Zusammenhang nicht nur Mischen oder Berühren der beiden flüssigen Medien, also Fälle, in denen das flüssige Entionisierungsmittel und das flüssige Kühlmedium eine gemeinsame Grenzfläche besitzen, sondern auch Fälle, in denen beide Flüssigkeiten durch ein weiteres Medium, das für Ionen permeabel ist, wie beispielsweise eine Membran, getrennt sind.

Die Trennung des Entionisierungsmittels und des Kühlmediums kann beispielsweise durch eine Phasentrennung, etwa mittels eines Phasenscheiders, oder durch die Verwendung einer Membranzelle oder eines Membranmoduls erfolgen. Damit lassen sich sehr hohe Intervalle zwischen zwei Wartungen realisieren.

Gemäß einer bevorzugten Ausführungsform des erfindungsgemäßen Verfahrens wird die Entionisierung des Kühlmediums kontinuierlich während des Betriebs der Brennstoffzelle durchgeführt. Die Abtrennung des Kühlmediums von dem Entionisierungsmittel erfolgt bevorzugt ebenfalls kontinuierlich.

Geeignete Apparate zur kontinuierlichen oder diskontinuierlichen Phasentrennung sind dem Fachmann bekannt und werden beispielsweise in der chemischen Verfahrenstechnik oder im Anlagenbau verwendet (siehe beispielsweise: "Chemietechnik", Dr. Eckhard Ignatowitz, Verlag Europa-Lehrmittel; "Grundlagenoperationen chemischer Verfahrenstechnik", Wilhelm R. A. Vauck, Hermann A. Müller, Deutscher Verlag für Grundstoffindustrie, Stuttgart 2000).

Membranmodule finden vielfache Anwendung in der Medizin-, Lebensmittel- und Chemietechnik. Bekannte Anwendungsbeispiele sind die Hämodialyse, die Entsalzung von Meerwasser mittels Umkehrosmose oder die Entsalzung von Farbstoffen mittels Nanofiltration. Es sind sowohl Polymermembranen als auch solche aus keramischen Werkstoffen verfügbar. Sie kommen in Form von Flach-, Rohr-, Kapillar, oder Spiralwickelmodulen zu Einsatz (siehe beispielsweise: R. Rautenbach, "Membranverfahren - Grundlagen der Modul- und Anlagenauslegung", Springer Verlag Berlin Heidelberg 1997).

Wird das flüssige Entionisierungsmittel so eingesetzt, dass es sich mit dem zirkulierenden Kühlmedium nicht vermischt, so kann man es gemäß einer zweiten Variante entweder direkt oder über eine Membran, insbesondere eine ionenpermeable Membran, mit dem Kühlmedium in Kontakt bringen. Ist das Entionisierungsmittel mit dem Kühlmedium im wesentlichen unmischbar, so kann das In-Kontakt-Bringen in einem Behälter erfolgen, der das Entionisierungsmittel enthält und der von dem, eine zweite Phase bildenden Kühlmedium durchströmt wird. Hat das Entionisierungsmittel eine höhere Dichte als das Kühlmedium, so durchströmt letzteres das Entionisierungsmittel von unten nach oben, und umgekehrt. Um eine hohe Grenzfläche der beiden flüssigen Phasen sicherzustellen, die eine hohe Effektivität der Entionisierung begünstigt, tritt das Kühlmedium vorzugsweise durch einen Flüssigkeitsverteiler in den Behälter ein. Der Austritt desselben erfolgt bevorzugt über eine beruhigte Zone, um so einen Mitriss von Entionisierungsmittel durch das Kühlmedium zu vermeiden. Der Behälter kann auch mit zusätzlichen Einbauten wie Böden, Füllkörpern oder Packungen ausgestattet sein, wie sie dem Fachmann aus der Extraktionstechnik bekannt sind (siehe beispielsweise: K. Sattler, "Thermische Trennverfahren", 2. Aufl. 1995, VCH-Verlagsgesellschaft, Weinheim).

Das In-Kontakt-Bringen kann aber auch in einem sog. Membrankontaktor erfolgen, bei dem die Grenzfläche der flüssigen Phasen durch eine poröse Membran stabilisiert wird. Der Membrankontaktor ist wegen der Unabhängigkeit der Trennleistung von Neigungswinkel und mechanischen Erschütterungen des Apparats für mobile Anwendungen besonders vorteilhaft.

Ein Membrankontaktor kann auch eingesetzt werden, wenn das flüssige Entionisierungsmittel und das Kühlmedium mischbar sind. In diesem Fall ist die Membran so beschaffen, dass die Membran selektiv durchlässig ist für die aus dem Kühlmedium zu entfernenden Ionen, nicht aber für das Entionisierungsmittel. Dies kann beispielsweise dadurch erreicht werden, dass die Membran Poren aufweist, welche größer als die aus dem Kühlmedium zu entfernenden Ionen aber kleiner als die Teilchen des Entionisierungsmittels sind. Dies lässt sich beispielsweise erreichen, indem ein oder mehrere polymere Entionisierungsmittel eingesetzt werden, deren Molekulargewicht größer als 200 g/mol, bevorzugt größer 500 g/mol ist. Die erforderliche Membranselektivität kann man aber auch bewirken oder verstärken, indem man einerseits eine Membran verwendet, die entweder positive oder negative Überschussladungen aufweist und man andererseits ein gleichnamig geladenes Entionisierungsmittel einsetzt.

Gemäß einer weiteren Variante kann man die Entionisierung mittels einer doppelten Donnan-Dialyse durchführen. Dabei werden zumindest zwei Entionisierungsmittel eingesetzt, die jeweils andere pH-Werte als das Kühlmedium aufweisen. Diese pH-Differenz stellt die Triebkraft des Diffusionsprozesses dar, so dass die aus dem Kühlmittel zu entfernenden Ionen sogar entgegen ihrem jeweiligen Konzentrationsgradienten aus dem Kühlmittel abgezogen werden können. Gemäß einer Ausführungsform strömt das Kühlmedium zwischen einer Anionen- und einer Kationentauschermembran hindurch. Hinter der Anionentauschermembran befindet sich als erstes Entionisierungsmittel eine wässrige Lösung mit hohem pH-Wert, beispielsweise eine NaOH-Lösung. Aus dieser diffundieren OH--Ionen in das Kühlmedium im Austausch gegen Anionen, die aus dem Kühlmedium in das sich hinter der Anionentauschermembran befindende erste Entionisierungsmittel diffundieren. Entsprechend befindet sich hinter der Kationentauschermembran als zweites Entionisierungsmittel eine wässrige Lösung mit niedrigem pH-Wert, beispielsweise H₂SO₄₋Lösung. Aus dieser diffundieren H₃O⁺-Ionen in das Kühlmedium im Austausch gegen Kationen, die aus dem Kühlmedium in das sich hinter der Kationentauschermembran befindende zweite Entionisierungsmittel diffundieren.

Bei allen genannten Varianten, bei denen anstelle einer Vermischung das Kühlmedium mit dem Entionisierungsmittel direkt oder indirekt in Kontakt gebracht wird, kann zwecks Verbesserung des Stoffaustauschs das Entionisierungsmittel bewegt werden. Dies kann zum einen durch eine in dem obengenannten Behälter oder dem Membranmodul angebrachte Rühreinrichtung oder durch eine zirkulation des Entionisierungsmittels über einen äußeren Kreislauf mittels einer Pumpe erfolgen.

In dem Kühlkreislauf sind üblicherweise ein oder mehrere Wärmetauscher angeordnet. Gemäß einer Variante der Erfindung ist lediglich ein Kühlkreislauf vorgesehen und der oder die Wärmetauscher stehen beispielsweise mit Luft oder Wasser oder einem anderen geeigneten Kühlmedium in Kontakt. Man kann jedoch auch einen ersten Kühlkreislauf (Primärkreislauf) vorsehen, der mit einem zweiten Kreislauf (Sekundärkreislauf) in thermischem Kontakt steht.

Bei Verwendung einer Membranzelle kühlt man vorteilhaft das Kühlmedium vor dem Entionisieren ab, um die Temperatur der mit dem Entionisierungsmittel und gegebenenfalls der Membran in Kontakt stehenden Lösungen niedrig zu halten. Dazu kann man beispielsweise das Modul für die Entionisierung stromabwärts (bezogen auf die Strömungsrichtungen des Kühlmittels im ersten bzw. einzigen Kühlkreislauf) von den Kühlern oder Wärmetauschern des ersten Kühlkreislaufes anordnen.

Bevorzugt verwendet man daher eine Anordnung, bei der das erwärmte Kühlmedium aus der Brennstoffzelle zunächst durch einen Wärmetauscher geleitet und dort abgekühlt wird. Anschließend wird das Kühlmedium mit dem Entionisierungsmittel vermischt (beispielsweise in einem statischen Mischer) oder wie oben beschrieben in Kontakt gebracht und im selben oder folgenden Modul eine Trennung von Entionisierungsmittel und entionisiertem Kühlmedium durchgeführt. Beide Schritte können in einer Stufe oder in mehreren Stufen erfolgen.

Als flüssige Entionisierungsmittel können an sich bekannte Flüssigkeiten verwendet werden, die in der Lage sind, Ionen zu binden. Die Bindung kann durch Komplexierung wie z.B. bei bekannten Komplexbildnern erfolgen. Beispiele für solche Verbindungen sind Zuckersäuren, Zitronensäure, Weinsäure, Nitrilotriessigsäure (NTA), Methylglycindiessigsäure (MGDA), Ethylendiamintetraessigsäure (EDTA) und weitere Polyaminopolycarbonsäuren wie auch Polyaminopolyphosphonsäuren. Wenn die komplexierenden Verbindungen an sich Feststoffe sind, so ist das flüssige Entionisierungsmittel eine Lösung dieser Verbindungen in einer Flüssigkeit, die mit dem Kühlmedium mischbar oder nicht mischbar sein kann. Die Bindung der Ionen kann auch durch ionische Wechselwirkung erfolgen. Dies kann beispielsweise der Fall sein bei der Verwendung von Aminen, quarternierten Aminen oder Polyaminen wie Polyethylenimin oder Polyvinylamin. Auch Mischungen eines Komplexbildners mit einer Verbindung, die über ionische Wechselwirkungen wirkt, sind möglich, wie etwa auch Lösungen von Komplexbildnern in solchen Verbindungen.

Als Membranen für die Membranmodule bzw. Membranseparatoren können im Sinne der Erfindung sowohl Polymermembranen als auch solche aus keramischen Werkstoffen eingesetzt werden. Es können sowohl Integralmembranen eingesetzt werden, d.h. Membranen, die aus einem einheitlichen Material bestehen, als auch Kompositmembranen, d.h. Membranen, bei denen auf eine oder mehrere grobporöse Trägerschicht(en) die eigentliche Membran, die aus einem anderen Material besteht als die Trägerschicht, und die gewünschten Trenneigenschaften aufweist, aufgebracht ist. Die Membranen werden eingesetzt in Form von Flach-, Rohr-, Kapillar, oder Spiralwikkelmodulen, wie sie beispielsweise in R. Rautenbach, "Membranverfahren - Grundlagen der Modul- und Anlagenauslegung", Springer Verlag Berlin Heidelberg 1997, beschrieben sind.

Bei der Variante, bei der Kühlmedium und Entionisierungsmittel im wesentlichen unmischbar sind, werden vorteilhaft makroporöse Membranen mit einer Porengröße von vorzugsweise mehr als 50 nm eingesetzt, die außerdem eine hohe Porosität, vorzugsweise mehr als 30%, aufweisen. Geeignete Membranmaterialien sind insbesondere Polymere, beispielsweise Polypropylen, Polysulfone, Polyethersulfone, Polyetherketone. Für die Kontaktierung verschiedener Phasen geeignete Membranmodule werden beispielsweise unter dem Namen Liqui-Cel® von der Fa. Celgard vertrieben. Es handelt sich um Module mit Hohlfasern aus Polypropylen.

Bei der Variante, bei das Kühlmedium und das Entionisierungsmittel mischbar sind, werden vorteilhaft Membranen eingesetzt, die, wie bereits oben beschrieben, selektiv durchlässig sind für die aus dem Kühlmedium zu entfernenden Ionen, nicht aber für das jeweilige Entionisierungsmittel. Es können dem Fachmann bekannte Dialyse-, Ultra- oder Nanofiltrationsmembranen eingesetzt werden, beispielsweise Membranen aus Polyamiden, Polysulfonen, Polyethersulfonen oder Polyetherketonen, die sowohl als integralasymmetrische Membranen oder als Kompositmembranen ausgeführt sein können, wobei letztere hergestellt sein können mittels Beschichten einer Trägerschicht oder mittels Grenzflächenpolymerisation.

Gemäß einer Variante des Verfahrens wird die Entfernung von Anionen und Kationen aus dem Kühlmedium in zwei separaten Modulen durchgeführt. Die Abtrennung von Entionisierungsmittel und Kühlmedium kann in den separaten Modulen nach demselben oder nach unterschiedlichen Verfahren erfolgen. Es ist auch möglich, mehrere Module zum Entfernen von Kationen und mehrere Module zum Entfernen von Anionen zu kombinieren. Als ein Beispiel mag die folgende Anordnung dienen: In Strömungsrichtung des primären Kühlkreislaufs wird das Kühlmedium zunächst durch einen Wärmetauscher geleitet und dadurch abgekühlt. Anschließend (bezogen auf die Strömungsrichtung) führt man einen Teil des Kühlmediums in ein Modul, in dem eine Vermischung mit einer MGDA-haltigen Lösung erfolgt. Gegebenenfalls enthaltene Kationen werden hier als MGDA-Komplex gebunden. Diese Lösung wird dann durch ein Membranmodul getrennt. Das Permeat ist das an Ionen verarmte Kühlmedium; das Retentat, welches das Entionisierungsmittel enthält, wird zurückgeführt und erneut mit einströmendem Kühlmittel vermischt. Das Permeat wird im folgenden Schritt mit einem flüssigen Polyamin vermischt, welches durch ionische Wechselwirkung enthaltene Anionen aus dem Kühlmedium entfernt. Die Abtrennung des Polyamins vom Kühlmedium erfolgt wie für den Komplexbildner beschrieben. Als Resultat werden sowohl Kationen als auch Anionen in einfacher Weise aus dem Kühlmedium entfernt.

Wegen der hohen Konzentration an wirksamen Funktionalitäten, können in solchen Entionisierungsmitteln große Mengen an Ionen gebunden werden. Dies ist ein großer Vorteil gegenüber festen Ionentauscher-Harzen, die einen hohen nicht funktionalisierten Anteil an Polymer enthalten. Weiterhin können die hier beschriebenen Flüssigkeiten, wenn Ihre Kapazität erschöpft ist, durch einfaches Ausfüllen aus dem System auch von einem Nichtfachmann entfernt werden. Neben verlängerten Wartungsintervallen resultiert also auch eine vereinfachte und kostengünstigere Wartung selbst.

Durch das beschriebene Verfahren werden ausschließlich ionische Bestandteile aus dem Kühlmedium entfernt. So kann man beispielsweise Glykole als Frostschutz zusetzen. Das Kühlmedium kann auch noch zusätzliche Korrosionsinhibitoren enthalten, wie zum Beispiel die in der Patentanmeldung DE-A 100 63 951 beschriebenen ortho-Kieselsäureester. Die ortho-Kieselsäureester haben vorzugsweise vier gleiche Alkoholat-Substituenten der Form Tetra(Alkoholat)silan. Typische Beispiel für geeignete Kieselsäureester sind reine Tetraalkoxysilane, wie Tetramethoxysilan, Tetraethoxysilan, Tetra(n-propoxy)silan, Tetra(isopropoxy)silan, Tetra(n-butoxy)silan, Tetra(tert.-butoxy)silan, Tetra(2-ethylbutoxy)silan, Tetra(2-ethylhexoxy)silan oder Tetra[2-[2-(2-methoxyethoxy)ethoxy]ethoxy]silan. Die genannten Substanzen sind entweder kommerziell erhältlich oder durch einfache Umesterung eines Äquivalentes Tetramethoxysilan mit vier Äquivalenten des entsprechenden längerkettigen Alkohols oder Phenols durch Abdestillieren von Methanol herstellbar.

Weiterhin können Kühlmittel für Brennstoffzellenantriebe eingesetzt werden, die eine oder mehrere fünfgliedrige heterozyklischen Verbindungen (Azolderivate) mit zwei oder drei Heteroatomen aus der Gruppe Stickstoff und Schwefel umfassen, welche kein oder maximal ein Schwefelatom enthalten und welche einen aromatischen oder gesättigten sechsgliedrigen Anellanten tragen können, gegebenenfalls auch in Kombination mit ortho-Kieselsäureestern. Derartige Kühlmittel sind in deutschen Patentanmeldung DE-A 101 28530 ausführlicher beschrieben.

Gegenstand der vorliegenden Erfindung ist schließlich auch ein Brennstoffzellenaggregat mit wenigstens einer Brennstoffzelle und wenigstens einem Kühlkreislauf für die Brennstoffzelle, das dadurch gekennzeichnet ist, dass in dem Kühlkreislauf wenigstens eine Entionisierungseinrichtung vorgesehen ist, in der ein flüssiges Entionisierungsmittel auf das Kühlmedium einwirken kann.

Vorteilhaft umfasst die Entionisierungseinrichtung wenigstens einen Mischer, beispielsweise einen statischen Mischer, und einen Membranseparator. Die Entionisierungseinrichtung kann auch wenigstens einen Mischer und einen Phasentrenner umfassen.

Es können verschiedenste, an sich bekannte Phasentrenner verwendet werden, wie sie etwa beschrieben sind in "Chemietechnik", Dr. Eckhard Ignatowitz, Verlag Europa-Lehrmittel; "Grundlagenoperationen chemischer Verfahrenstechnik", Wilhelm R. A. Vauck, Hermann A. Müller, Deutscher Verlag für Grundstoffindustrie, Stuttgart 2000. Geeignete Membranzellen sind etwa beschrieben in R. Rautenbach, "Membranverfahren - Grundlagen der Modul- und Anlagenauslegung", Springer Verlag Berlin Heidelberg 1997.

Gemäß einer anderen Ausführungsform umfasst das erfindungsgemäße Brennstoffzellenaggregat wenigstens einen Kontaktor, der einen direkten oder indirekten Kontakt von Entionisierungsmittel und Kühlmedium gewährleistet. Der Kontaktor kann eine ionenpermeable Membran aufweisen, welche das Kühlmedium und das flüssige Entionisierungsmittel voneinander trennt.

Die mit dem erfindungsgemäßen Verfahren und der erfindungsgemäßen Vorrichtung erzielbaren ionischen Leitfähigkeiten im abgereicherten Strom liegen abhängig von der Eingangsleitfähigkeit üblicherweise unter 1 µS/cm.

Die vorliegende Erfindung wird im folgenden unter Bezugnahme auf die in den beigefügten Zeichnungen dargestellten Ausführungsbeispiele ausführlicher erläutert.

In den Zeichnungen zeigt:
- Figur 1: eine schematische Darstellung einer ersten Ausführungsform eines erfindungsgemäßen Brennstoffzellenaggregats mit einem Kühlkreislauf, in welchem zwei Entionisierungseinrichtungen angeordnet sind, in denen Entionisierungsmittel und Kühlmedium vermischt werden;
- Figur 2: eine Variante des Brennstoffzellenaggregats der Figur 1, bei welcher anstelle einer Vermischung eine indirekte Kontaktierung des Kühlmediums und des Entionisierungsmittels realisiert ist; und schließlich
- Figur 3: eine Variante der Ausführungsform der Figur 1, bei der die Abtrennung von Entionisierungsmittel und Kühlmedium durch einen Phasentrenner erfolgt.

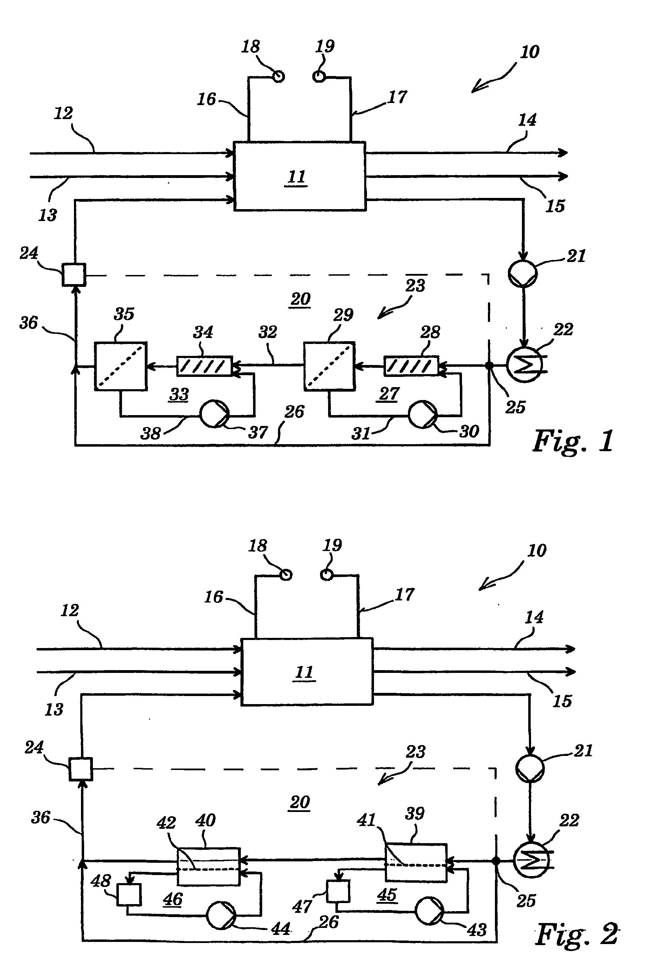

In Figur 1 ist ein erfindungsgemäßes Brennstoffzellenaggregat 10 schematisch dargestellt. Das Brennstoffzellenaggregat 10 umfasst einen Brennstoffzellenstapel 11, der Zufuhrleitungen 12 für den Brennstoff, beispielsweise Wasserstoffgas, und Zufuhrleitungen 13 für das Verbrennungsmittel, beispielsweise Luft oder Sauerstoff, aufweist. Bei der Zufuhr von gasförmigen Substanzen wird zumindest eines der zugeführten Gase vor der Einleitung in den Brennstoffzellenstapel 11 befeuchtet, um ein Austrocknen der Polymermembranen der Brennstoffzellen zu verhindern. Die Reaktionsprodukte können den Brennstoffzellenstapel 11 über Auslassleitungen 14,15 verlassen. Wird die Brennstoffzelle mit reinem Wasserstoff und Sauerstoff betrieben, so entsteht als Reaktionsprodukt Wasser, welches teilweise zum Befeuchten der über die Leitungen 12 und 13 einströmenden Gase verwendet werden kann. Der von dem Brennstoffzellenstapel 11 erzeugte elektrische Strom kann über Sammelleitungen 16,17 zu positiven bzw. negativen Anschlussklemmen 18,19 geführt werden.

Das Brennstoffzellenaggregat 10 weist zumindest einen Kühlkreislauf auf, der insgesamt mit der Bezugsziffer 20 bezeichnet ist. Als Kühlmedium kann beispielsweise Wasser verwendet werden, welches je nach Einsatzgebiet weitere Hilfsstoffe, wie beispielsweise Frostschutzmittel oder Korrosionsinhibitoren enthalten kann. In dem Kühlkreislauf 20 ist eine Umwälzpumpe 21 angeordnet, welche die Förderung des Kühlmediums bewirkt. Das Kühlmedium wird durch einen Wärmetauscher 22 transportiert, welcher beispielsweise mit Umgebungsluft in thermischern Kontakt steht. Es kann jedoch auch ein thermischer Kontakt zu einem (nicht dargestellten) Sekundärkühlkreislauf realisiert werden. Stromabwärts von dem Wärmetauscher 22 ist in dem Kühlkreislauf 20 eine Entionisierungseinrichtung 23 angeordnet, durch die zumindest ein Teil des Kühlmediumstroms geleitet werden kann. Der Anteil des in die Entionisierungseinrichtung 23 geleiteten Kühlmediumstroms kann variiert werden. Im dargestellten Beispiel ist dazu ein Leitfähigkeitssensor 24 in dem Kühlkreislauf 20 angeordnet, der eine Ventileinrichtung 25 steuert. Bei höherer Leitfähigkeit des Kühlmediums wird mehr und bei geringerer Leitfähigkeit weniger oder gar kein Kühlmedium in die Entionisierungseinrichtung 23 geleitet.

Der Teil des Kühlmediums, der nicht entionisiert werden soll, kann die Entionisierungseinrichtung 23 über eine Bypass-Leitung 26 umgehen.

In der in Figur 1 dargestellten Variante umfasst die Entionisierungseinrichtung 23 einen Kreislauf 27 eines ersten Entionisierungsmittels, sowie einen in dem Kreislauf 27 angeordneten statischen Mischer 28 und ein Membranmodul 29. In dem statischen Mischer 28 werden das Kühlmedium und das Entionisierungsmittel in innigen Kontakt gebraucht, so dass Ionen aus dem Kühlmedium in das Entionisierungsmittel übergehen können. Das so gebildete Fluidgemisch wird in das Membranmodul 29 geleitet und dort in ein Retentat und ein Permeat aufgetrennt. Das Retentat, welches das im wesentlichen das erste Entionisierungsmittel und darin angereicherte Ionen enthält, wird durch eine mit einer Förderpumpe 30 versehene Leitung 31 zurück in den statischen Mischer 28 geleitet. Das erste Entionisierungsmittel dient im dargestellten Fall zur Abtrennung der Kationen im Kühlmedium. Ein geeignetes erstes Entionisierungsmittel ist beispielsweise eine Lösung des Komplexbildners Zitronensäure oder Methylglycindiessigsäure. Das Permeat wird über eine Leitung 32 in einen Kreislauf 33 eines zweiten Entionisierungsmittels geleitet, in welchem wiederum ein statischer Mischer 34 und ein Membranmodul 35 vorgesehen sind. Das zweite Entionisierungsmittel dient zum Abtrennung der Anionen aus dem Kühlmedium und kann beispielsweise flüssige polymere Amine umfassen. Nach innigem Kontakt der Fluide wird das Gemisch aus dem statischen Mischer 34 in das Membranmodul 35 geleitet und dort erneut in Permeat und ein Retentat aufgetrennt. Das Permeat, das im wesentlichen aus entionisiertem Kühlmedium besteht, wird über eine Leitung 36 zurück in den Brennstoffzellenstapel 11 geleitet, während das Retentat über eine mit einer Förderpumpe 37 versehene Leitung 38 zurück in den statischen Mischer 34 geführt wird.

Figur 2 zeigt eine Variante der Ausführungsform der Figur 1, bei der das Kühlmedium und des Entionisierungsmittel nicht vermischt, sondern indirekt in Kontakt gebracht werden. Bauelemente, die den bereits im Zusammenhang mit Figur 1 beschriebenen Bauelementen entsprechen, werden mit denselben Bezugsziffern bezeichnet. In der Variante der Figur 2 wird das Kühlmedium nach Durchlaufen des Wärmetauschers 22 nacheinander in zwei Kontaktoren 39 und 40 geführt, die beispielsweise als Membrankontaktoren realisiert sein können. Dabei werden die Entionisierungsmittel und das Kühlmedium durch ionenpermeable Membranen 41, 42 voneinander getrennt. In den Kontaktoren 39, 40 erfolgt jeweils die Abtrennung von Anionen und Kationen (im Austausch gegen OH-- bzw. H⁺-Ionen). Die Entionisierungsmittel werden mittels Pumpen 43 bzw. 44 in den Kreisläufen 45 und 46 über jeweils ein Reservoir 47 bzw. 48 umgepumpt. Als Entionisierungsmittel können beispielsweise im Kreislauf 45 NaOH-Lösung und im Kreislauf 46 H₂SO₄-Lösung verwendet werden.

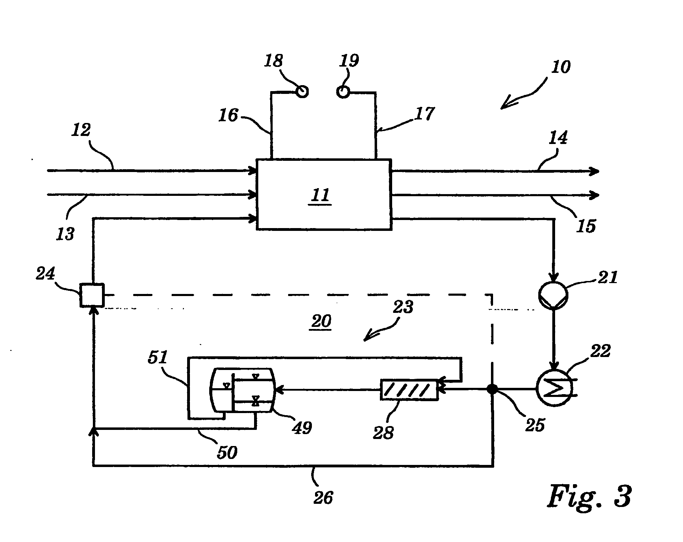

Schließlich zeigt Figur 3 eine einstufige Variante einer Entionisierungseinrichtung des Brennstoffzellenaggregats 10 der Figur 1, bei welchem die Trennung des Entionisierungsmittels vom Kühlmedium durch eine Phasentrennung erfolgt. Die übrigen Schritte sind im Vergleich zur Variante der Figur 1 unverändert. Aus dem statischen Mischer 28 wird das Fluidgemisch aus Kühlmedium und Entionisierungsmittel in einen Phasentrenner 49 geleitet. Die untere Phase, welche das entionisierte Kühlmedium enthält, wird über eine Leitung 50 zurück in den Brennstoffzellstapel 11 geleitet. Die obere Phase enthält das Entionisierungsmittel und wird über eine Leitung 51 in den statischen Mischer 28 recycliert.

Selbstverständlich können die Kreisläufe 27, 33, 45, 46 bzw. die Leitung 51 in den oben skizzierten Ausführungsbeispielen (hier nicht dargestellte) Anschlussstutzen aufweisen, die eine Entnahme von verbrauchtem bzw. eine Einspeisung von frischem Entionisierungsmittel ermöglichen.

## Patentansprüche

1. Verfahren zum Entionisieren eines in einem Kühlkreislauf zirkulierenden Kühlmediums einer Brennstoffzelle, wobei man zumindest intermittierend das aus der Brennstoffzelle kommende Kühlmedium mit einem flüssigen Entionisierungsmittel so in Kontakt bringt, dass das Entionisierungsmittel Ionen aus dem Kühlmedium aufnehmen kann, anschließend das Kühlmedium und das Entionisierungsmittel wieder trennt und das entionisierte Kühlmedium in die Brennstoffzelle zurückleitet.

2. Verfahren gemäß Anspruch 1, **dadurch gekennzeichnet, dass** man das Kühlmedium kontinuierlich entionisiert.

3. Verfahren gemäß einem der Ansprüche 1 oder 2, **dadurch gekennzeichnet, dass** man das Entionisierungsmittel und das Kühlmedium vermischt und anschließend das Entionisierungsmittel von dem Kühlmedium abtrennt.

4. Verfahren gemäß Anspruch 3, **dadurch gekennzeichnet, dass** man zum Trennen des Entionisierungsmittels von dem Kühlmedium einen Phasenscheider verwendet.

5. Verfahren gemäß Anspruch 3, **dadurch gekennzeichnet, dass** man zum Trennen des Entionisierungsmittels von dem Kühlmedium ein Membranmodul verwendet.

6. Verfahren gemäß einem der Ansprüche 1 oder 2, **dadurch gekennzeichnet, dass** man das Entionisierungsmittel und das Kühlmedium direkt oder über eine Membran in Kontakt miteinander bringt.

7. Verfahren gemäß Anspruch 6, **dadurch gekennzeichnet, dass** das Entionisierungsmittel und das Kühlmedium unterschiedliche pH-Werte aufweisen.

8. Verfahren gemäß einem der Ansprüche 1 bis 7, **dadurch gekennzeichnet, dass** man als Entionisierungsmittel eine Lösung einer ionenkomplexierenden Substanz verwendet.

9. Verfahren nach einem der Ansprüche 1 bis 7, **dadurch gekennzeichnet, dass** man als Entionisierungsmittel ein flüssiges Amin, ein gelöstes Amin oder ein gelöstes quarterniertes Amin verwendet.

10. Brennstoffzellenaggregat (10) mit wenigstens einer Brennstoffzelle (11) und wenigstens einem Kühlkreislauf (20) für die Brennstoffzelle, **dadurch gekennzeichnet, dass** in dem Kühlkreislauf (20) wenigstens eine Entionisierungseinrichtung (23) vorgesehen ist, in der ein flüssiges Entionisierungsmittel vorrübergehend auf das Kühlmedium einwirken kann.

11. Brennstoffzellenaggregat gemäß Anspruch 10, **dadurch gekennzeichnet, dass** die Entionisierungseinrichtung (23) wenigstens einen Mischer (28,34) und einen Membranseparator (29,35) umfasst.

12. Brennstoffzellenaggregat gemäß Anspruch 10, **dadurch gekennzeichnet, dass** die Entionisierungseinrichtung(23) wenigstens einen Mischer (28) und einen Phasentrenner (49) umfasst.

13. Brennstoffzellenaggregat gemäß Anspruch 10, **dadurch gekennzeichnet, dass** die Entionisierungseinrichtung (23) wenigstens einen Kontaktor (39,40) umfasst.

14. Brennstoffzellenaggregat gemäß Anspruch 13, **dadurch gekennzeichnet, dass** der Kontaktor (39,40) eine ionenpermeable Membran (41,42) aufweist, welche das Kühlmedium und das flüssige Entionisierungsmittel voneinander trennt.

## Claims

1. A process for the deionization of a cooling medium of a fuel cell which circulates in a cooling circuit, which comprises bringing the cooling medium coming from the fuel cell into at least intermittent contact with a liquid deionizing agent in such a way that the deionizing agent can take up ions from the cooling medium, subsequently separating the cooling medium and the deionizing agent again and recirculating the deionized cooling medium to the fuel cell.

2. The process according to claim 1, wherein the cooling medium is deionized continuously.

3. The process according to claim 1 or 2, wherein the deionizing agent and the cooling medium are mixed and the deionizing agent is subsequently separated from the cooling medium.

4. The process according to claim 3, wherein a phase separator is used for separating the deionizing agent from the cooling medium.

5. The process according to claim 3, wherein a membrane module is used for separating the deionizing agent from the cooling medium.

6. The process according to claim 1 or 2, wherein the deionizing agent and the cooling medium are brought into contact with one another either directly or via a membrane.

7. The process according to claim 6, wherein the deionizing agent and the cooling medium have different pH values.

8. The process according to any of claims 1 to 7, wherein a solution of a substance capable of complexing ions is used as deionizing agent.

9. The process according to any of claims 1 to 7, wherein a liquid amine, a dissolved amine or a dissolved quaternized amine is used as deionizing agent.

10. A fuel cell apparatus (10) comprising at least one fuel cell (11) and at least one cooling circuit (20) for the fuel cell, wherein at least one deionization apparatus (23) in which a liquid deionizing agent can act temporarily on the cooling medium is provided in the cooling circuit (20).

11. The fuel cell apparatus according to claim 10, wherein the deionization apparatus (23) comprises at least one mixer (28,34) and a membrane separator (29,35).

12. The fuel cell apparatus according to claim 10, wherein the deionization apparatus (23) comprises at least one mixer (28) and a phase separator (49).

13. The fuel cell apparatus according to claim 10, wherein the deionization apparatus (23) comprises at least one contactor (39,40).

14. The fuel cell apparatus according to claim 13, wherein the contactor (39,40) has an ion-permeable membrane (41,42) which separates the cooling medium and the liquid deionizing agent from one another.

## Revendications

1. Procédé de désionisation d'un milieu de refroidissement, circulant dans un circuit de refroidissement, d'une pile à combustible, dans lequel on amène en contact au moins de manière intermittente le milieu de refroidissement sortant de la pile à combustible avec un agent de désionisation liquide de façon que l'agent de désionisation puisse capter des ions provenant du milieu de refroidissement, on sépare ensuite à nouveau le milieu de refroidissement et l'agent de désionisation et on reconduit le milieu de refroidissement désionisé dans la pile à combustible.

2. Procédé suivant la revendication 1, **caractérisé en ce qu'**on désionise en continu le milieu de refroidissement.

3. Procédé suivant l'une des revendications 1 ou 2, **caractérisé en ce qu'**on mélange l'agent de désionisation et le milieu de refroidissement et ensuite on isole l'agent de désionisation à partir du milieu de refroidissement.

4. Procédé suivant la revendication 3, **caractérisé en ce que**, pour la séparation de l'agent de désionisation à partir du milieu de refroidissement, on utilise un séparateur de phases.

5. Procédé suivant la revendication 3, **caractérisé en ce que**, pour séparer l'agent de désionisation à partir du milieu de refroidissement, on utilise un module à membrane.

6. Procédé suivant l'une des revendications 1 et 2, **caractérisé en ce qu'**on met en contact l'agent de désionisation et le milieu de refroidissement directement ou par l'intermédiaire d'une membrane.

7. Procédé suivant la revendication 6, **caractérisé en ce que** l'agent de désionisation et le milieu de refroidissement présentent des valeurs de pH différentes.

8. Procédé suivant l'une des revendications 1 à 7, **caractérisé en ce que**, comme agent de désionisation, on utilise une solution d'une substance complexant des ions.

9. Procédé suivant l'une des revendications 1 à 7, **caractérisé en ce que**, comme agent de désionisation, on utilise une amine liquide, une amine dissoute ou une amine quaternaire dissoute.

10. Appareillage de pile à combustible (10) comprenant au moins une pile à combustible (11) et au moins un circuit de refroidissement (20) pour la pile à combustible, **caractérisé en ce que**, dans le circuit de refroidissement (20), il est prévu au moins un dispositif de désionisation (23) dans lequel un agent de désionisation liquide peut agir de manière temporaire sur le milieu de refroidissement.

11. Appareillage de pile à combustible suivant la revendication 10, **caractérisé en ce que** le dispositif de désionisation (23) comporte au moins un mélangeur (28, 34) et un séparateur à membrane (29, 35).

12. Appareillage de pile à combustible suivant la revendication 10, **caractérisé en ce que** le dispositif de désionisation (23) comporte au moins un mélangeur (28) et un séparateur de phases (49).

13. Appareillage de pile à combustible suivant la revendication 10, **caractérisé en ce que** le dispositif de désionisation (23) comprend au moins un contacteur (39, 40).

14. Appareillage de pile à combustible suivant la revendication 13, **caractérisé en ce que** le contacteur (39, 40) présente une membrane perméable aux ions (41, 42) qui sépare l'un de l'autre le milieu de refroidissement et l'agent de désionisation liquide.
